# EUROPÄISCHE PATENTSCHRIFT

(11) **EP 1 505 108 B1**
(45) Veröffentlichungstag und Bekanntmachung des Hinweises auf die Patenterteilung: **14.02.2007**
(21) Anmeldenummer: 04102456.3
(22) Anmeldetag: 02.06.2004
(51) Int. Cl.: C08K 5/098, C08K 5/138, C08K 5/101, C08J 3/14

(54) **Polyamid-Laser-Sinter-Pulver mit einem Metallsalz und einem Fettsäurederivat, Verfahren zur Herstellung und daraus hergestellte Formkörper**
Laser-sinterable polyamide powder containing a metal salt and a fat acid derivative, process of preparation and molded articles therefrom
Poudre de polyamide pour frittage laser contenant un sel métallique et un dérivé d'acide gras, son procédé de préparation, et objets moulés à partir de celle-ci

(30) Priorität: 29.07.2003 DE 10334496
(43) Veröffentlichungstag der Anmeldung: 09.02.2005
(73) Patentinhaber: Degussa AG, 40474 Düsseldorf (DE)
(72) Erfinder: Monsheimer, Sylvia, 45721 Haltern am See (DE); Grebe, Maik, 44805 Bochum (DE); Baumann, Franz-Erich, Dr., 48249 Dülmen (DE)

(56) Entgegenhaltungen:
- EP-A- 1 424 354
- DE-A1- 4 421 454
- US-A- 5 248 333
- SCHMACHTENBERG E ET AL: "LASERSINTERN VON POLYAMID. LASER-SINTERING OF POLYAMIDE" KUNSTSTOFFE, HANSER, MUNCHEN, DE, Bd. 87, Nr. 6, Juni 1997 (1997-06), Seiten 773-774,776, XP000656866 ISSN: 0023-5563

## Beschreibung

Die Erfindung betrifft ein Laser-Sinter-Pulver auf Basis von Polyamid, vorzugsweise Polyamid 12, welches Metallsalz(-partikel) und ein Fettsäurederivat aufweist, ein Verfahren zur Herstellung dieses Pulvers sowie Formkörper, hergestellt durch selektives Laser-Sintern dieses Pulvers.

Die zügige Bereitstellung von Prototypen ist eine in der jüngsten Zeit häufig gestellte Aufgabe. Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel verlaufen ineinander und erstarren schnell wieder zu einer festen Masse. Durch wiederholtes Belichten von immer neu aufgebrachten Schichten können mit diesem Verfahren dreidimensionale Körper auch komplexer Geometrie einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6,136,948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, Ionomere und Polyamid.

In der Praxis hat sich beim Laser-Sintern vor allem Polyamid 12-Pulver (PA 12) für die Herstellung von Formkörpern, insbesondere von technischen Bauteilen bewährt. Die aus PA 12 Pulver gefertigten Teile genügen den hohen Anforderungen, die bezüglich der mechanischen Beanspruchung gestellt werden und kommen damit in ihren Eigenschaften besonders nahe an die späteren Serienteile, die durch Extrusion oder Spritzgießen erstellt werden.

Gut geeignet ist dabei ein PA 12-Pulver mit einer mittleren Korngröße (d₅₀) von 50 bis 150 µm, wie man es beispielsweise gemäß DE 197 08 946 oder auch DE 44 21 454 erhält. Vorzugsweise wird dabei ein Polyamid 12 Pulver mit einer Schmelztemperatur von 185 bis 189 °C, einer Schmelzenthalpie von 112 J/g und einer Erstarrungstemperatur von 138 bis 143 °C, wie es in EP 0 911 142 beschrieben wird.

Nachteilig bei den derzeit eingesetzten Polyamid-Pulvern sind Einfallstellen, sowie raue Oberflächen an den Formkörpern, die bei der Wiederverwendung nicht versinterten Materials auftreten. Das führt dazu, daß ein hoher Anteil an unbenutztem Pulver, sogenanntem Neupulver hinzugegeben werden muß, um diese Effekte zu vermeiden.

Insbesondere wenn große Anteile an Gebrauchtpulver verwendet werden, also Laser-Sinter-Pulver, welches schon einmal eingesetzt wurde, aber bei diesem Einsatz nicht aufgeschmolzen wurde, wird dieser Effekt beobachtet. Mit den Oberflächendefekten geht häufig eine Verschlechterung der mechanischen Eigenschaften einher, insbesondere wenn der Formkörper eine raue Oberfläche annimmt. Die Schädigung kann sich z. B. durch einen abfallenden Elastizitätsmodul, eine verschlechterte Reißdehnung oder ein verschlechtertes Kerbschlagverhalten bemerkbar machen.

Aufgabe der vorliegenden Erfindung war es deshalb, ein Laser-Sinter-Pulver bereitzustellen, welches eine bessere Resistenz gegenüber den thermischen Belastungen beim Lasersintern und verbesserte Alterungseigenschaften aufweist und somit besser wiederzuverwenden ist.

Überraschenderweise wurde nun gefunden, dass sich durch Zugabe von Metallsalzen schwacher Säuren und Fettsäurederivaten zu Polyamiden Sinterpulver herstellen lassen, aus denen sich Formkörper durch Laser-Sintern produzieren lassen, die deutlich unempfindlicher gegenüber den thermischen Belastungen sind als Formkörper aus herkömmlichen SinterPulvern. Dadurch kann z. B. die Auffrischrate, d. h. die Menge unbenutzten Pulvers, die bei der Verwendung von Gebrauchtpulver zugesetzt werden muss, deutlich reduziert werden. Besonders vorteilhaft ist es, wenn nur die durch den Bau von Formteilen verbrauchte Menge ersetzt werden muss, was mit dem erfindungsgemäßen Pulver (nahezu) erreicht werden kann.

Gegenstand der vorliegenden Erfindung ist deshalb ein Sinterpulver zum selektiven Laser-Sintem, welches dadurch gekennzeichnet ist, dass das Pulver zumindest ein Polyamid und zumindest ein Metallsalz, sowie ein Fettsäurederivat, aufweist.

Die Einarbeitung des Fettsäurederivates erfolgt ebenfalls nach diesen beiden Methoden, wobei die Einarbeitung gleichzeitig oder aber auch nacheinander und mit verschiedenen Methoden erfolgen kann.

Außerdem sind Gegenstand der vorliegenden Erfindung Formkörper, hergestellt durch Laser-Sintem, welche dadurch gekennzeichnet sind, dass sie Metallsalz und ein Fettsäurederivat und zumindest ein Polyamid beinhalten.

Das erfindungsgemäße Sinterpulver hat den Vorteil, dass aus ihm durch Laser-Sintern hergestellte Formkörper auch aus wiederverwendetem Material hergestellt werden können. Es sind deshalb Formkörper zugänglich, die auch nach mehrfacher Wiederverwendung des überschüssigen Pulvers keine Einfallstellen aufweisen. Neben den Einfallstellen entsteht oft eine sehr raue Oberfläche, da es zur Alterung des Materials kommt. Die erfindungsgemäßen Formkörper zeigen eine deutlich höhere Beständigkeit gegenüber solchen Alterungsprozessen, was sich durch eine geringe Versprödung, eine gute Reißdehnung und/oder ein gutes Kerbschlagverhalten bemerkbar macht.

Das erfindungsgemäße Sinterpulver hat außerdem den Vorteil, dass es sehr gut auch nach einer thermischen Alterung als Sinterpulver verwendet werden kann. Dies ist unter anderem auch deshalb sehr gut möglich, weil bei der thermischen Alterung von erfindungsgemäßem Pulver überraschenderweise keine Abnahme der Rekristallisationstemperatur, ja sogar in vielen Fällen ein Anstieg der Rekristallisationstemperatur festgestellt werden kann (gleiches gilt häufig auch für die Kristallisationsenthalpie). Dadurch wird bei der Verbauung von gealtertem erfindungsgemäßem Pulver ein nahezu gleiches Kristallisationsverhalten erreicht wie mit Neupulver. Bisher übliches gealtertes Pulver kristallisiert erst bei deutlich niedrigeren Temperaturen als Neupulver, weshalb beim Verbauen von Altpulver Einfallstellen auftreten.

Ein weiterer Vorteil des erfindungsgemäßen Sinterpulvers liegt darin, dass es sich in beliebigen Mengen (0 bis 100 Teile) mit einem herkömmlichen Laser-Sinter-Pulver auf Basis von Polyamiden gleicher chemischer Struktur mischen lässt. Das erhaltene Pulvergemisch zeigt gegenüber herkömmlichem Sinterpulver ebenfalls eine verbesserte Beständigkeit gegenüber den thermischen Belastungen beim Lasersintern.

Außerdem konnte überraschenderweise festgestellt werden, dass Formkörper, hergestellt aus dem erfindungsgemäßen Sinterpulver, auch bei dessen mehrfacher Wiederverwendung gleichbleibend gute mechanische Eigenschaften aufweisen, insbesondere hinsichtlich Elastizitätsmodul, Zugfestigkeit, Dichte und Reißdehnung.

Das erfindungsgemäße Sinterpulver sowie ein Verfahren zu dessen Herstellung wird nachfolgend beschrieben, ohne dass die Erfindung darauf beschränkt sein soll.

Das erfindungsgemäße Sinterpulver zum selektiven Laser-Sintern zeichnet sich dadurch aus, dass das Pulver zumindest ein Polyamid und zumindest ein Metallsalz einer schwachen Säure und zumindest ein Fettsäurederivat, vorzugsweise ausgewählt ein Fettsäureester oder ein Fettsäureamid, aufweist. Als Polyamid weist das erfindungsgemäße Sinterpulver vorzugsweise ein Polyamid auf, welches pro Carbonamid-Gruppe mindestens 8 Kohlenstoffatome aufweist. Bevorzugt weist das erfindungsgemäße Sinterpulver mindestens ein Polyamid auf, welches 9 oder mehr Kohlenstoffatome pro Carbonamid-Gruppe aufweist. Ganz besonders bevorzugt Ganz besonders bevorzugt weist das Sinterpulver zumindest ein Polyamid, ausgewählt aus Polyamid 612 (PA 612), Polyamid 11 (PA 11) und Polyamid 12 (PA 12), auf.

Das erfindungsgemäße Sinterpulver weist vorzugsweise Polyamid mit einer mittleren Partikelgröße von 10 bis 250 µm, vorzugsweise von 45 bis 100 µm und besonders bevorzugt von 50 bis 80 µm auf.

Für das Lasersintern ist insbesondere ein Polyamid 12 Sinterpulver geeignet, welches eine Schmelztemperatur von 185 bis 189 °C, vorzugsweise von 186 bis 188 °C, eine Schmelzenthalpie von 112 ± 17 J/g, vorzugsweise von 100 bis 125 J/g und eine Erstarrungstemperatur von 133 bis 148 °C, vorzugsweise von 139 bis 143 °C aufweist. Der Prozess für die Herstellung für die den erfindungsgemäßen Sinterpulvern zugrunde liegenden Polyamidpulver ist allgemein bekannt und kann im Fall von PA 12 z. B. den Schriften DE 29 06 647, DE 35 10 687, DE 35 10 691 und DE 44 21 454, entnommen werden. Das benötigte Polyamidgranulat kann von verschiedenen Herstellern bezogen werden, beispielsweise wird Polyamid 12 Granulat von der Degussa AG unter dem Handelsnamen VESTAMID angeboten.

Das erfindungsgemäße Sinterpulver weist bezogen auf die Summe der im Pulver vorhandenen Polyamide vorzugsweise von 0,01 bis 30 Gew.-% zumindest eines Metallsalzes, bevorzugt von 0,1 bis 20 Gew.-% Metallsalz, besonders bevorzugt von 0,5 bis 15 Gew.-% Metallsalz und ganz besonders bevorzugt von 1 bis 10 Gew.-% Metallsalz, jeweils bevorzugt als Partikel auf. Zusätzlich weist das erfindungsgemäße Sinterpulver bezogen auf die Summe der im Pulver vorhandenen Polyamide vorzugsweise von 0,01 bis 30 Gew.-% zumindest eines Fettsäurederivates, bevorzugt von 0,1 bis 20 Gew.-% Fettsäurederivat, besonders bevorzugt von 0,5 bis 15 Gew.-% Fettsäurederivat und ganz besonders bevorzugt von 1 bis 10 Gew.-% Fettsäurederivat auf.

Das erfindungsgemäße Sinterpulver kann eine Mischung von Metallsalzpartikeln, Fettsäurederivatpartikeln und Polyamidpartikeln aufweisen oder aber Polyamidpartikel bzw. - Fettsäureester, oder Ethylenbisstearylamid (EBS) und Metallsalze aufweisen. Besonders bevorzugt ist die Einarbeitung des Fettsäurederivats in das Polymer und anschließend die Mischung mit dem Metallsalz in Pulverform. Bei einem Anteil der Summe der Zusatzstoffe, bestehend aus Metallsalz und Fettsäurederivat von unter 0,01 Gew.-% bezogen auf die Summe der im Pulver vorhandenen Polyamide nimmt der gewünschte Effekt der thermischen Stabilität und der Vergilbungsresistenz deutlich ab. Bei einem Anteil der Zusatzstoffe von über 30 Gew.-% bezogen auf die Summe der im Pulver vorhandenen Polyamide verschlechtern sich die mechanischen Eigenschaften wie z. B. die Reißdehnung der aus solchen Pulvern hergestellten Formkörper deutlich.

Die im erfindungsgemäßen Sinterpulver enthaltenen Metallsalze sind vorzugsweise Metallsalze schwacher Säuren. Besonders bevorzugt werden Metallcarbonate, zum Beispiel Natriumcarbonat, Kalziumcarbonat, oder Magnesiumcarbonat eingesetzt. Diese Salze sind günstig zu erhalten und am besten verfügbar.

Die im erfindungsgemäßen Sinterpulver enthaltenen Fettsäurederivate sind vorzugsweise Fettsäureester oder Fettsäureamide, und ganz besonders bevorzugt Ethylenbisstearylamid (EBS), welches unter dem Namen Licolub FA 1 von der Firma Clariant zu beziehen ist.

Vorteilhaft für die Pulverauftragung auf die zu sinternde Schicht ist es, wenn die Metallsalze und Fettsäurederivate die Polyamidkörner in Form feinster Partikel umhüllen, was sich entweder durch Trockenmischen feingepulverter Metallsalze und Fettsäurederivate auf das Polyamidpulver oder Nassmischen von Polyamiddispersionen in einem Lösungsmittel, in welchem die Metallsalze und Fettsäurederivate zumindest eine geringe Restlöslichkeit aufweisen, erreichen lässt, da so ausgerüstete Partikel eine besonders gute Rieselfähigkeit aufweisen und auf eine Zugabe von Rieselhilfsmitteln weitestgehend oder sogar vollständig verzichtet werden kann. Auch eine Kombination der beiden Verfahren für die beiden Additive ist möglich. Man kann aber auch Pulver mit in Masse eincompoundierten Metallsalzen und Fettsäurederivaten einsetzen, wenn man die Rieselfähigkeit - z. B. durch Aufinischen einer Rieselhilfe - anderweitig gewährleistet. Geeignete Rieselhilfen, wie pyrogenes Aluminiumoxid, pyrogenes Siliziumdioxid oder pyrogenes Titandioxid, sind dem Fachmann bekannt.

Erfindungsgemäßes Sinterpulver kann deshalb diese oder auch weitere Hilfsstoffe und/oder Füllstoff aufweisen. Solche Hilfsstoffe können z. B. die vorstehend genannten Rieselhilfsmittel, wie z. B. pyrogenes Siliziumdioxid oder auch gefällte Kieselsäuren sein. Pyrogenes Siliziumdioxid wird zum Beispiel unter dem Produktnamen Aerosil^{®}, mit unterschiedlichen Spezifikationen, durch die Degussa AG angeboten. Vorzugsweise weist erfindungsgemäßes Sinterpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polyamide auf. Die Füllstoffe können z. B. Glas-, Metall- oder Keramikpartikel, wie z. B. massive oder hohle Glaskugeln, Stahlkugeln oder Metallgrieß oder Buntpigmente, wie z. B. Übergangsmetalloxide sein.

Die Füllstoffpartikel weisen dabei vorzugsweise eine kleinere oder ungefähr gleich große mittlere Korngröße wie die Partikel der Polyamide auf. Vorzugsweise sollte die mittlere Korngröße d₅₀ der Füllstoffe die mittlere Korngröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Laser-Sinter-Apparatur.

Vorzugsweise weist erfindungsgemäßes Sinterpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf

Beim Überschreiten der angegebenen Höchstgrenzen für Hilfs- und/oder Füllstoffe kann es, je nach eingesetztem Füll- oder Hilfsstoff, zu deutlichen Verschlechterungen der mechanischen Eigenschaften von Formkörpern kommen, die mittels solcher Sinterpulver hergestellt wurden. Die Überschreitung kann außerdem zu einer Störung der Eigenabsorption des Laserlichts durch das Sinterpulver führen, so dass ein solches Pulver für das selektive Lasersintern nicht mehr einsetzbar ist.

Das erfindungsgemäße Sinterpulver weist bevorzugt nach einer Wärmealterung des Pulvers eine Rekristallisationstemperatur (Rekristallisationspeak in der DSC) und/oder eine Kristallisationsenthalpie auf, die sich nicht zu kleineren Werten gegenüber dem Neupulver verschiebt. Unter Wärmealterung wird dabei ein Aussetzen des Pulvers für wenige Minuten bis mehrere Tage einer Temperatur im Bereich der Rekristallisationstemperatur bis wenige Grade unterhalb der Schmelzetemperatur verstanden. Eine typische künstliche Alterung kann z. B. bei einer Temperatur, die mit einer Abweichung von ca. plusminus 5 K der Rekristallisationstemperatur entspricht, für 5 bis 10, vorzugsweise für 7 Tage erfolgen. Eine Alterung beim Verbauen des Pulvers erfolgt typischerweise bei einer Temperatur von 1 bis 15, vorzugsweise von 3 bis 10 K unterhalb der Schmelzetemperatur für wenige Minuten bis zu zwei Tagen, je nachdem wie lange die Bauzeit für das jeweilige Bauteil beträgt. Die Wärmealterung geschieht beim Lasersintern dadurch, dass Pulver, welches beim schichtweisen Aufbau des dreidimensionalen Objekts nicht vom Laserstrahl erfasst wird, während des Bauvorgangs im Bauraum Temperaturen von nur wenigen Grad unterhalb der Schmelzetemperatur ausgesetzt werden. Bevorzugtes erfindungsgemäßes Sinterpulver weist nach Wärmealterung des Pulvers eine Rekristallisationstemperatur (einen Rekristallisationspeak) und/oder eine Kristallisationsenthalpie auf, die sich zu größeren Werten hin verschiebt. Vorzugsweise verschieben sich sowohl die Rekristallisationstemperatur als auch die Kristallisationsenthalphie zu größeren Werten. Ganz besonders bevorzugt weist ein erfindungsgemäßes Pulver, welches als Neupulver eine Rekristallisationstemperatur größer 138 °C aufweist, eine Rekristallisationstemperatur als Altpulver, welches durch Alterung für 7 Tage bei 135 °C erhalten wurde, auf, die von 0 bis 3, vorzugsweise von 0,1 bis 1 K über der Rekristallisationstemperatur des Neupulvers liegt.

Die Herstellung der erfindungsgemäßen Sinterpulver ist einfach möglich und erfolgt bevorzugt gemäß dem erfindungsgemäßen Verfahren zur Herstellung von erfindungsgemäßem Sinterpulver, welches sich dadurch auszeichnet, dass zumindest ein Polyamid mit zumindest einer Metallsalz, vorzugsweise mit Pulver von Metallsalzpartikeln und zumindest einem Fettsäurederivat, vorzugsweise mit Pulver von Fettsäurederivatpartikeln, vermischt wird. Zum Beispiel kann ein durch Umfällung oder Vermahlung erhaltenes Polyamidpulver in organischem Lösungsmittel gelöst oder suspendiert werden und mit Metallsalzpartikeln vermischt werden oder aber das Polyamidpulver kann in Masse mit Metallsalzpartikeln vermischt werden. Bei dem Arbeiten in einem Lösemittel wird vorzugsweise zumindest ein Metallsalz bzw. Metallsalzpartikel, die vorzugsweise zumindest teilweise in einem Lösemittel gelöst oder aber suspendiert vorliegen, und zumindest ein Fettsäurederivat, welches ebenfalls mindestens teilweise in einem Lösemittel gelöst oder zumindest supendiert ist, mit einer Lösung, die Polyamid aufweist, vermischt, wobei die Polyamid aufweisende Lösung das Polyamid entweder gelöst aufweisen kann und das Lasersinterpulver durch Fällen von Polyamid aus der metallsalzhaltigen und/oder fettsäurederivathaltigen Lösung erhalten wird oder die Lösung das Polyamid als Pulver suspendiert aufweisen kann und das Lasersinterpulver durch Entfernen des Lösemittels erhalten wird.

Eine feinteilige Vermischung kann in der einfachsten Ausführungsart des erfindungsgemäßen Verfahrens auf die verschiedensten bekannten Weisen erzielt werden. So kann das Vermischen beispielsweise durch Aufmischen fein gepulverter Metallsalze und/oder Fettsäurederivate auf das trockene Polyamidpulver in schnelllaufenden mechanischen Mischern erfolgen oder als Nassmischung in langsamlaufenden Aggregaten - z. B. Schaufeltrockner oder umlaufenden Schneckenmischern (sog. Nautamischern) - oder durch Dispergieren der Metallsalze und/oder eines Fettsäurederivates und des Polyamidpulvers in einem organischen Lösungsmittel und anschließende destillative Entfernung des Lösungsmittels. Bei dieser Vorgehensweise ist es günstig, wenn das organische Lösungsmittel die Metallsalze ebenso wie die Fettsäurederivate zumindest in geringer Konzentration löst oder zumindest suspendiert, da bei der Trocknung die Metallsalze und Fettsäurederivate in Form feinster Partikel auskristallisieren und das Polyamidkorn umhüllen. Für diese Variante geeignete Lösemittel sind beispielsweise niedere Alkohole mit 1 - 3 C-Atomen, bevorzugt kann Ethanol als Lösemittel eingesetzt werden.

Sowohl das Metallsalz als auch das Fettsäurederivat kann mit dem Polymer im Dry Blend oder nass eingemischt zugegeben werden. Die Zugabe kann gleichzeitig oder nacheinander erfolgen; auch eine Kombination Dry Blend und Nasseinmischung ist möglich. Die Kombination, das Fettsäurederivat nass einzumischen und anschließend das Metallsalz in einem schnelllaufenden Mischer aufzubringen, ist als besonders bevorzugt anzusehen.

Das Polyamidpulver kann bei einer dieser ersten Varianten des erfindungsgemäßen Verfahrens ein bereits als Lasersinterpulver geeignetes Polyamidpulver sein, dem einfach feinteilige Metallsalzpartikel und Fettsäurederivatpartikel zugemischt werden. Die Partikel der Additive weisen dabei vorzugsweise eine kleinere oder ungefähr gleich große mittlere Korngröße wie die Partikel der Polyamide auf. Vorzugsweise sollte die mittlere Korngröße d₅₀ der Additivpartikel die mittlere Korngröße d₅₀ der Polyamidpulver um nicht mehr als 20 %, vorzugsweise um nicht mehr als 15 % und ganz besonders bevorzugt um nicht mehr als 5 % überschreiten. Die Korngröße ist insbesondere limitiert durch die zulässige Bauhöhe bzw. Schichtdicke in der Laser-Sinter-Apparatur.

Es ist ebenso möglich, herkömmliche Sinterpulver mit erfindungsgemäßen Sinterpulvern zu mischen. Auf diese Weise lassen sich Sinterpulver mit einer optimalen Kombination von mechanischen und optischen Eigenschaften herstellen. Das Verfahren zur Herstellung solcher Mischungen kann z. B. DE 34 41 708 entnommen werden.

In einer weiteren Verfahrensvariante werden eine oder mehrere Metallsalze und ein oder mehrere Fettsäurederivate mit einem, vorzugsweise geschmolzenem Polyamid durch Eincompoundieren gemischt und das erhaltene additivhaltige Polyamid wird durch (Kalt-)-Mahlung oder Umfällung zu Lasersinterpulver verarbeitet. Üblicherweise wird bei der Compoundierung ein Granulat erhalten, welches anschließend zu Sinterpulver verarbeitet wird. Diese Umarbeitung kann z. B. durch Vermahlen oder Umfällen erfolgen. Die Verfahrensvariante, bei welcher die Metallsalze und Fettsäurederivate eincompoundiert werden, hat gegenüber dem reinen Mischungsverfahren den Vorteil, dass eine homogenere Verteilung der Metallsalze und Fettsäurederivate in dem Sinterpulver erzielt wird.

In diesem Fall wird man zur Verbesserung des Rieselverhaltens eine geeignete Rieselhilfe, wie pyrogenes Aluminiumoxid, pyrogenes Siliziumdioxid oder pyrogenes Titandioxid, dem gefällten oder kaltgemahlenen Pulver zusetzen.
In einer weiteren, bevorzugten Verfahrensvariante wird das Metallsalz und /oder die Fettsäurederivate einer ethanolischen Lösung von Polyamid bereits beim Fällprozess dem Polyamid zugemischt. Ein solcher Fällprozess ist beispielsweise in DE 35 10 687 und DE 29 06 647 beschrieben. Mittels dieses Verfahrens kann z. B. Polyamid 12 aus einer ethanolischen Lösung durch kontrollierte Abkühlung nach einem geeigneten Temperaturprogramm ausgefällt werden. Die Metallsalze und Fettsäurederivate ergeben bei dieser Vorgehensweise ebenfalls eine feinteilige Umhüllung der Polyamidkörner, wie dies zuvor bei der Suspensionsvariante beschrieben worden ist. Für eine detaillierte Beschreibung des Fällverfahrens wird auf DE 35 10 687 bzw. DE 29 06 647 verwiesen.

Der Fachmann kann diese Verfahrenvariante in abgewandelter Form auch auf andere Polyamide anwenden, wobei Polyamid und Lösemittel so gewählt werden müssen, dass sich das Polyamid bei einer erhöhten Temperatur in dem Lösemittel löst und dass das Polyamid bei einer niedrigeren Temperatur und/oder beim Entfernen des Lösemittels aus der Lösung ausfällt. Durch Zugabe von Metallsalzen und/oder Fettsäurederivaten, vorzugsweise in Form von Partikeln, zu dieser Lösung und anschließende Trocknung werden die entsprechenden erfindungsgemäßen Polyamid-Lasersinterpulver erhalten.

Als Metallsalze können z. B. die Salze einer schwachen Säure, besonders Metallcarbonate, speziell Natriumcarbonat, Kalziumcarbonat oder Magnesiumcarbonat, die handelsübliche Produkte sind und beispielsweise bei der Fa. Fluka oder der Firma Merck bezogen werden können, eingesetzt werden.

Als Fettsäurederivat können Fettsäureester oder Fettsäureamide, beispielsweise Ethylenbisstearoylamid (EBS) oder auch Erucasäureamid eingesetzt werden. Auch diese sind handelsübliche Produkte und können beispielsweise unter dem Markennamen Licolub FA1 bei der Clariant bzw. unter dem Namen Loxamid E bei der Firma Cognis bezogen werden.

Zur Verbesserung der Verarbeitungsfähigkeit oder zur weiteren Modifikation des Sinterpulvers können diesem anorganische Buntpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren sowie Füllstoffpartikel zugegeben werden. Vorzugsweise wird, bezogen auf das Gesamtgewicht an Polyamiden im Sinterpulver, soviel dieser Stoffe den Polyamiden zugegeben, dass die für das erfindungsgemäße Sinterpulver angegeben Konzentrationen für Füll- und/oder Hilfsstoffe eingehalten werden.

Gegenstand der vorliegenden Erfindung sind auch Verfahren zur Herstellung von Formkörpern durch selektives Lasersintern, bei denen erfindungsgemäße Sinterpulver, die Polyamid und Metallsalze und Fettsäurederivate, vorzugsweise in partikulärer Form aufweisen, eingesetzt werden. Insbesondere ist Gegenstand der vorliegenden Erfindung ein Verfahren zur Herstellung von Formkörpern durch selektives Lasersintern eines metallsalz- und fettsäurederivathaltigen Fällpulvers auf Basis eines Polyamid 12, welches eine Schmelztemperatur von 185 bis 189 °C, eine Schmelzenthalpie von 112 ± 17 J/g und eine Erstarrungstemperatur von 136 bis 145°C aufweist und dessen Verwendung in US 6,245,281 beschrieben wird.

Diese Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Die erfindungsgemäßen Formkörper, die durch selektives Laser-Sintern hergestellt werden, zeichnen sich dadurch aus, dass sie ein metallsalz- und fettsäurederivathaltiges Polyamid aufweisen. Vorzugsweise weisen die erfindungsgemäßen Formkörper zumindest ein Polyamid auf, welches pro Carbonamid-Gruppe mindestens 8 Kohlenstoffatome aufweist. Ganz besonders bevorzugt weisen erfindungsgemäße Formkörper zumindest ein Polyamid 612, Polyamid 11 und/oder ein Polyamid 12 und zumindest ein Metallsalz und zumindest ein Fettsäurederivat auf.

Das in dem erfindungsgemäßen Formkörper vorhandene Metallsalz ist das Salz einer schwachen Säure, besonders einem Metallcarbonat. Vorzugsweise handelt es sich bei dem Metallsalz um Calciumcarbonat oder Natriumcarbonat. Vorzugsweise weist der erfindungsgemäße Formkörper, bezogen auf die Summe der im Formkörper vorhandenen Polyamide, von 0,01 bis 30 Gew.-% an Metallsalzen, bevorzugt von 0,1 bis 20 Gew.-%, besonders bevorzugt von 0,5 bis 15 Gew.-% und ganz besonders bevorzugt von 1 bis 10 Gew.-% auf.

Außerdem weist der erfindungsgemäße Formkörper, bezogen auf die Summe der im Formkörper vorhandenen Polyamide, von 0,01 bis 30 Gew.-% an Fettsäurederivaten, bevorzugt von 0,1 bis 20 Gew.-%, besonders bevorzugt von 0,5 bis 15 Gew.-% und ganz besonders bevorzugt von 1 bis 10 Gew.-% auf.

Die Formkörper können außerdem Füllstoffe und/oder Hilfsstoffe, wie z. B. thermische Stabilisatoren und/oder Oxidationsstabilisatoren wie z. B. sterisch gehinderte Phenolderivate aufweisen. Füllstoffe können z. B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polyamide auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf.

Die erfindungsgemäßen Formkörper können insbesondere auch dadurch hergestellt werden, dass ein erfindungsgemäßes Sinterpulver als gealtertes Material (Alterung wie oben beschrieben) eingesetzt wird, wobei dieses einen Rekristallisationspeak und eine Kristallisationsenthalpie aufweist, die jeweils nicht kleiner sind als die des nicht gealterten Materials. Vorzugsweise wird ein erfindungsgemäßer Formkörper unter Verwendung eines gealterten Materials eingesetzt, welches einen höheren Rekristallisationspeak und eine höhere Kristallisationsenthalpie als das nicht gealterte Material aufweist. Die Formkörper weisen trotz der Verwendung von Altpulver nahezu die gleichen Eigenschaften auf wie aus Neupulver hergestellte Formkörper.

Die folgenden Beispiele sollen das erfindungsgemäße Sinterpulver sowie dessen Verwendung beschreiben, ohne die Erfindung auf die Beispiele einzuschränken.

Die in den nachfolgenden Beispielen durchgeführte Bestimmung der BET-Oberfläche erfolgte nach DIN 66131. Die Schüttdichte wurde mit einer Apparatur gemäß DIN 53466 ermittelt. Die Messwerte der Laserbeugung wurden an einem Malvern Mastersizer S, Ver. 2.18 erhalten.

### Beispiel 1: Einarbeitung von Natriumcarbonat durch Umfällung

40 kg ungeregeltes, durch hydrolytische Polymerisation hergestelltes PA 12 (Die Herstellung eines solchen Polyamids wird z. B. in DE21 52 194, DE25 45 267 oder DE35 1 0690 beschrieben.) mit einer relativen Lösungsviskosität ηᵣₑₗ. von 1.61 (in angesäuertem m-Kresol) und einem Endgruppengehalt von 72 mmol/kg COOH bzw. 68 mmol/kg NH2 werden mit 0,3 kg IRGANOX ® 1098, 0,8 kg Loxamid E und 0,8 kg Natriumcarbonat sowie 350 1 Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K bis 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C und 400mbar abdestilliert, und der Rückstand anschließend bei 20 mbar und 85 °C 3 Stunden nachgetrocknet. Von dem erhaltenen Produkt wurde eine Siebanalyse durchgeführt, die folgendes Ergebnis lieferte:

| | | |
|---|---|---|
| BET: | 5,2 m²/g | |
| Schüttdichte: | 442 g/l | |
| Laserbeugung: d(10%): 46µm, | d(50 %): 67µm, | d(90%): 102µm, |

### Beispiel 2: Einarbeitung von Natriumcarbonat und Erucasäureamid durch Compoundierung und Umfällung

40 kg ungeregeltes, durch hydrolytische Polymerisation hergestelltes PA 12 mit einer relativen Lösungsviskosität ηᵣₑₗ. von 1.61 (in angesäuertem m-Kresol) und einem Endgruppengehalt von 72mmol/kg COOH bzw. 68mmol/kg NH2 werden mit 0,3 kg IRGANOX ® 245 und 0,8 kg Natriumcarbonat und 0,4 kg Erucasäueramid (Loxamid E) bei 225 °C in einer Zweiwellen-Compoundiermaschine (Bersttorf ZE25) extrudiert und als Strang granuliert. Dieses Compound wird anschließend mit 350 l Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C/400 mbar abdestilliert, und der Rückstand anschließend bei 20 mbar/85 °C 3 Stunden nachgetrocknet. Von dem erhaltenen Produkt wurde eine Siebanalyse durchgeführt, die folgendes Ergebnis lieferte:

| | | | |
|---|---|---|---|
| BET: | | 5,3 m²/g | |
| Schüttdichte: | | 433 g/l | |
| Laserbeugung: | d(10 %): 39 µm, | d(50 %): 61 µm, | d(90 %): 81 µm, |

### Beispiel 3: Einarbeitung von Calciumcarbonat und N,N'-Bisstearoylethylendiamin in ethanolischer Suspension

Man verfährt wie in Beispiel 1 beschrieben, jedoch wird das Metallsalz und das Fettsäureamid nicht zu Beginn zugegeben, sondern es werden 0,4 kg Calciumcarbonat und 0,4 kg N,N'-Bisstearoylethylendiamin (Licolub FA 1) bei 75 °C erst nach der Fällung der fällungsfrischen Suspension im Schaufeltrockner zugesetzt. Die Trocknung sowie die weitere Aufarbeitung erfolgt wie unter Beispiel 1 beschrieben.

| | | | |
|---|---|---|---|
| BET: | | 6,4 m²/g | |
| Schüttdichte: | | 433 g/l | |
| Laserbeugung: | d(10 %): 45 µm, | d(50 %): 58 µm, | d(90 %): 83 µm, |

### Beispiel 4: Einarbeitung von Magnesiumcarbonat und N,N'-Bisstearoylethylendiamin in ethanolischer Suspension:

Man verfährt wie in Beispiel 3 beschrieben, setzt jedoch 0,4 kg Magnesiumcarbonat und 0,8 kg N,N'-Bisstearoylethylendiamin (Licolub FA 1) bei 75 °C der fällungsfrischen Suspension im Schaufeltrockner zu und trocknet wie unter Beispiel 1 beschrieben zu Ende.

| | | | |
|---|---|---|---|
| BET: | | 5,0m²/g | |
| Schüttdichte: | | 455g/l | |
| Laserbeugung: | d(10 %): 41 µm, | d(50 %): 61 µm, | d(90 %): 84 µm, |

### Beispiel 5: Einarbeitung von Magnesiumcarbonat und N,N'-Bisstearoylethylendiamin in ethanolischer Suspension und im Dry Blend:

Man verfährt wie in Beispiel 3 beschrieben, setzt jedoch 0,4 kg N,N'-Bisstearoylethylendiamin (Licolub FA 1) (1 Gew.-%) bei 75 °C der fällungsfrischen Suspension im Schaufeltrockner zu und trocknet wie unter Beispiel 1 beschrieben zu Ende. Dem Pulver wird dann im Mischer (Henschelmischer) 0,8 kg Magnesiumcarbonat zugefügt.

| | | | |
|---|---|---|---|
| BET: | | 5,8m²/g | |
| Schüttdichte: | | 450g/l | |
| Laserbeugung: | d(10 %): 40 µm, | d(50 %): 56 µm, | d(90 %): 90 µm, |

### Bespiel 6: Vergleichsbeispiel (nicht erfindungsgemäß):

40 kg ungeregeltes, durch hydrolytische Polymerisation hergestelltes PA 12 mit einer relativen Lösungsviskosität ηᵣₑₗ. von 1.61 (in angesäuertem m-Kresol) und einem Endgruppengehalt von 72mmol/kg COOH bzw. 68mmol/kg NH2 werden mit 0,3 kg IRGANOX^{®} 1098 in 350 1 Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C/400 mbar abdestilliert, und der Rückstand anschließend bei 20 mbar/ 85 °C 3 Stunden nachgetrocknet.

| | | | |
|---|---|---|---|
| BET: | | 6,9 m²/g | |
| Schüttdichte: | | 429 g/l | |
| Laserbeugung: | d(10 %): 42 µm, | d(50 %): 69 µm, | d(90 %): 91 µm |

### Weiterverarbeitung und Alterungsversuche:

Alle Proben aus den Beispielen 1 bis 6 wurden in einem Mixaco-Mischer CM50 D, 150 U/min, 1 Minute lang mit 0,1 Gew.-% Aerosil 200 versetzt. Teile der erhaltenen Pulver aus den Beispielen 1 bis 6 wurden im Vakuumtrockenschrank für 7 Tage bei 135 °C künstlich gealtert und anschließend ohne Zugabe von neuem Pulver auf einer Laser-Sinter-Maschine verbaut. An den Bauteilen gemäß wurden mechanische Werte mittels Zugversuch nach EN ISO 527 ermittelt (Tabelle 1). Die Dichte wurde nach einem vereinfachten internen Verfahren ermittelt. Dazu werden die hergestellten Zugstäbe nach ISO 3167 (multi purpose test specimen) vermessen und daraus das Volumen berechnet, das Gewicht der Zugstäbe bestimmt und aus Volumen und Gewicht die Dichte berechnet. Zugstäbe und Bauteile gemäß ISO 3167 wurden zu Vergleichzwecken auch aus Neupulver (nicht gealtertem Pulver) hergestellt. Die Herstellung erfolgte jeweils auf einer Laser-Sinter-Maschine EOSINT P360 der Firma EOS GmbH.

**Tabelle 1: mechanische Werte an künstlich gealtertem Pulver im Vergleich mit nicht gealtertem Pulver**

| | Reißdehnung in % | Elastizitätsmodul in N/mm² | Dichte in g/cm³ |
|---|---|---|---|
| Teile aus Standardpulver gemäß Beispiel 6, nicht gealtert | 21,2 | 1641 | 0,96 |
| Teile aus Standardpulver gemäß Beispiel 6, gealtert | 9,4 | 244 | 0,53 |
| Teile aus Beispiel 1, nicht gealtert | 18,4 | 1741 | 0,95 |
| Teile aus Beispiel 1, gealtert | 15,5 | 1633 | 0,94 |
| Teile aus Beispiel 2, gealtert | 20,3 | 1599 | 0,93 |
| Teile aus Beispiel 3, gealtert | 20,9 | 1727 | 0,95 |
| Teile aus Beispiel 4, gealtert | 17,0 | 1680 | 0,93 |
| Teile aus Beispiel 5, gealtert | 19,6 | 1653 | 0,94 |

Wie der Tabelle 1 zu entnehmen ist, werden durch das Einmischen von Metallsalzen und Fettsäurederivaten die nachfolgend beschriebenen Verbesserungen erzielt. Die Dichte nach der Alterung bleibt durch die Modifikation etwa auf dem Niveau wie bei einem Neupulver. Auch die mechanischen Eigenschaften wie die Reißdehnung und der Elastizitätsmodul verbleiben trotz Alterung des Pulvers auf hohem Niveau.

### Versuch zur Kreislaufverarbeitung

Ein Pulver, hergestellt gemäß Beispiel 5 und ein Vergleichspulver, hergestellt gemäß Beispiel 6, wobei jeweils auf eine künstliche Alterung verzichtet wurde, wurden außerdem auf einer Laser-Sinter-Maschine (EOSINT P360 der Firma EOS GmbH) im Kreislauf, das heißt, dass eingesetztes, aber nicht versintertes Pulver im nächsten Bauprozeß wieder eingesetzt wird, verarbeitet. Nach jedem Durchlauf wurde durch Zugabe von 20 % unbenutztem Pulver das wiedereingesetzte Pulver aufgefrischt. An den Bauteilen wurden mechanische Werte mittels Zugversuch nach EN ISO 527 ermittelt. Die Dichte wurde nach dem vereinfachten internen Verfahren, wie oben beschrieben, ermittelt. In Tabelle 2 sind die Messwerte von Bauteilen, die durch die Kreislaufverarbeitung erhalten wurden, aufgeführt.

**Tabelle 2: Kreislaufverarbeitung**

| | **Material aus Beispiel 5** | | | **Vergleichsbeispiel; Beispiel 6** | | |
|---|---|---|---|---|---|---|
| | **Bauteildichte [g/cm³]** | **E-Modul [Mpa]** | **Reißdehnung [%]** | **Bauteildichte [g/cm³]** | **E-Modul [MPa]** | **Reißdehnung [%]** |
| **1. Durchlauf** | 0,93 | 1620 | 14,7 | 0,95 | 1603 | 17,8 |
| **3. Durchlauf** | 0,93 | 1601 | 17,3 | 0,88 | 1520 | 15,2 |
| **6. Durchlauf** | 0,94 | 1709 | 17,8 | 0,8 | 1477 | 14,9 |

Der Tabelle 2 ist eindeutig zu entnehmen, dass auch beim 6. Durchlauf weder die Dichte noch die mechanischen Eigenschaften des aus einem erfindungsgemäßen Pulver hergestellten Bauteil nachlassen. Im Gegensatz dazu nehmen die Dichte und die mechanischen Eigenschaften des aus dem Vergleichspulver hergestellten Bauteil mit der Anzahl der Durchläufe deutlich ab.

Zur weiteren Untersuchung von erfindungsgemäßem Pulver wurden sowohl an erfindungsgemäß hergestelltem Pulver als auch an Proben von Bauteilen DSC-Untersuchungen nach DIN 53765 mit einem DSC-Gerät (Perkin Eimer DSC 7) durchgeführt. Die Ergebnisse dieser Untersuchungen sind in Tabelle 3 zusammengefasst.

Die Bauteile entsprechen wiederum ISO 3167 und wurden wie oben beschrieben erhalten. Charakteristisch für die erfindungsgemäßen Pulver bzw. für Bauteile, die aus dem erfindungsgemäßen Pulver hergestellt wurden, ist eine zum nicht modifizierten Pulver erhöhte Schmelzenthalpie, sowie eine deutlich erhöhte Rekristallisationstemperatur. Die Kristallisationsenthalpie ist ebenfalls erhöht. Die Werte beziehen sich auf wie weiter oben beschriebenes künstlich gealtertes Pulver bzw. auf Bauteile, die aus diesem gealterten Pulver hergestellt wurden.

**Tabelle 3: Werte der DSC-Messung**

| | **1. Aufheizen** | **Abkühlen** | **Abkühlen** | **2. Aufheizen** |
|---|---|---|---|---|
| | **Schmelzenthalpie** | **Rekristallisationspeak** | **Kristallisationsenthalpie** | **Schmelzenthalpie** |
| | Δ**H_{S}** | **T_{KP}** | Δ**H_{K}** | Δ**H_{S}** |
| | J/g | °C | J/g | J/g |
| **Bauteil (aus künstlich gealtertem Pulver)** | | | | |
| **Aus Pulver aus Beispiel 1** | 115 | 143 | 71 | 72 |
| **Aus Pulver aus Beispiel 2** | 108 | 145 | 68 | 76 |
| **Aus Pulver aus Beispiel 3** | 98 | 139 | 68 | 73 |
| **Aus Pulver aus Beispiel 4** | 92 | 141 | 70 | 71 |
| **Aus Pulver aus Beispiel 5** | 105 | 140 | 72 | 75 |
| **Aus 6. DL Kreislauf, aus Pulver aus Beispiel 5** | 101 | 142 | 69 | 75 |
| **Standardmaterial; Beispiel 6** | 88 | 131 | 58 | 60 |
| | | | | |

| **Bauteil (aus nicht gealtertem Pulver)** | | | | |
|---|---|---|---|---|
| **Standardmaterial; Beispiel 6** | 106 | 136 | 63 | 67 |

Wie der Tabelle zu entnehmen ist, sind die Bauteile aus gealterten, erfindungsgemäß modifizierten Pulver bezüglich ihrer kristallinen Eigenschaften den Bauteilen aus einem unbenutzten Pulver ähnlich, während das Bauteil aus gealtertem Vergleichspulver (Standardmaterial) deutlich abweichende Eigenschaften aufweist. Bezüglich der Rekristallisationstemperatur und der Kristallisationsenthalpie kann außerdem festgestellt werden, dass das Metallsalz und Fettsäurederivat aufweisende Pulver als Altpulver eine gleiche oder sogar höhere Rekristallisationstemperatur und Kristallisationsenthalpie gegenüber dem unbehandelten Neupulver aufweist. Im Gegensatz dazu nimmt die Rekristallisationstemperatur und die Kristallisationsenthalpie beim unbehandelten Altpulver gegenüber dem Neupulver ab.

## Patentansprüche

1. Sinterpulver zum selektiven Laser-Sintern,
**dadurch gekennzeichnet,**
**dass** das Pulver zumindest ein Polyamid und zumindest ein Metallsalz einer schwachen Säure, und zumindest ein Fettsäurederivat, aufweist.

2. Sinterpulver nach Anspruch 1,
**dadurch gekennzeichnet,**
**dass** es ein Fettsäurederivat aufweist, welches ein Fettsäureamid oder Fettsäureester oder ein Ethylenbisstearylamid aufweist

3. Sinterpulver nach Anspruch 1,
**dadurch gekennzeichnet,**
**dass** es ein Polyamid aufweist, welches pro Carbonamid-Gruppe zumindest 8 Kohlenstoffatome aufweist.

4. Sinterpulver nach Anspruch 1 oder 2,
**dadurch gekennzeichnet,**
**dass** es Polyamid 612, Polyamid 11 oder Polyamid 12 oder Copolyamide basierend auf den vorgenannten Polyamiden aufweist.

5. Sinterpulver nach einem der Ansprüche 1 bis 3,
**dadurch gekennzeichnet,**
**dass** das Pulver bezogen auf die Summe der im Pulver vorhandenen Polyamide von jeweils 0,01 bis 30 Gew.-% Metallsalz und Fettsäurederivat aufweist.

6. Sinterpulver nach Anspruch 4,
**dadurch gekennzeichnet,**
**dass** das Pulver bezogen auf die Summe der im Pulver vorhandenen Polyamide von jeweils 0,5 bis 15 Gew.-% Metallsalz und Fettsäurederivat aufweist.

7. Sinterpulver nach einem der Ansprüche 1 bis 5,
**dadurch gekennzeichnet,**
**dass** das Pulver eine Mischung von feinteiligen Metallsalz- und Fettsäurepartikeln und Polyamidpartikeln aufweist.

8. Sinterpulver nach einem der Ansprüche 1 bis 5,
**dadurch gekennzeichnet,**
**dass** das Pulver in Polyamidpartikeln eingearbeitete Metallsalze und feinteilige Partikel von Fettsäurederivaten aufweist.

9. Sinterpulver nach einem der Ansprüche 1 bis 5,
**dadurch gekennzeichnet,**
**dass** das Pulver in Polyamidpartikeln eingearbeitete Fettsäurederivate und feinteilige Metallsalzpartikel aufweist.

10. Sinterpulver nach einem der Ansprüche 1 bis 5,
**dadurch gekennzeichnet,**
**dass** das Pulver in Polyamidpartikeln eingearbeitete Metallsalze und Fettsäurederivate aufweist.

11. Sinterpulver nach zumindest einem der Ansprüche 1 bis 9,
**dadurch gekennzeichnet,**
**dass** die Metallsalze Metallcarbonate sind.

12. Sinterpulver nach zumindest einem der Ansprüche 1 bis 10,
**dadurch gekennzeichnet,**
**dass** nach Wärmealterung des Pulvers der Rekristallisationspeak und/oder die Kristallisationsenthalpie des Pulvers sich nicht zu kleineren Werten verschiebt.

13. Sinterpulver nach zumindest einem der Ansprüche 1 bis 11,
**dadurch gekennzeichnet,**
**dass** nach Wärmealterung des Pulvers der Rekristallisationspeak und/oder die Kristallisationsenthalpie sich zu größeren Werten verschiebt.

14. Sinterpulver nach zumindest einem der Ansprüche 1 bis 12,
**dadurch gekennzeichnet,**
**dass** die Metallsalze Natrium- oder Calciumcarbonat oder Magnesiumcarbonat sind.

15. Sinterpulver nach zumindest einem der Ansprüche 1 bis 11
**dadurch gekennzeichnet,**
**dass** es zusätzlich Hilfsstoffe und/oder Füllstoff aufweist.

16. Sinterpulver nach Anspruch 12,
**dadurch gekennzeichnet,**
**dass** es als Hilfsstoff Rieselhilfsmittel aufweist.

17. Sinterpulver nach Anspruch 12 oder 13,
**dadurch gekennzeichnet,**
**dass** es als Füllstoff Glaspartikel aufweist.

18. Verfahren zur Herstellung von Sinterpulver gemäß zumindest einem der Ansprüche 1 bis 14,
**dadurch gekennzeichnet,**
**dass** zumindest ein Polyamid mit einem Metallsalz und einem Fettsäurederivat vermischt wird.

19. Verfahren nach Anspruch 17,
**dadurch gekennzeichnet,**
**dass** durch Umfällung oder Vermahlung erhaltenes Polyamidpulver in organischem Lösungsmittel gelöst oder suspendiert oder in Masse mit Metallsalzpartikeln und Fettsäurederivatpartikeln vermischt wird.

20. Verfahren nach Anspruch 17,
**dadurch gekennzeichnet,**
**dass** die Metallsalze und Fettsäurenderivate in eine Schmelze von Polyamid eincompoundiert werden und das erhaltene additivhaltige Polyamid durch Fällung oder Vermahlung zu Lasersinterpulver verarbeitet wird.

21. Verfahren nach Anspruch 17,
**dadurch gekennzeichnet,**
**dass** zumindest ein Metallsalz bzw. Metallsalzpartikel und ein Fettsäurederivat mit einer Lösung, die Polyamid aufweist, vermischt wird, wobei die Polyamid aufweisende Lösung das Polyamid entweder gelöst aufweist und das Lasersinterpulver durch Fällen erhalten wird oder die Lösung das Polyamid als Pulver suspendiert aufweist und das Lasersinterpulver durch Entfernen des Lösemittels erhalten wird.

22. Verfahren nach Anspruch 17,
**dadurch gekennzeichnet,**
**dass** die in den Ansprüchen 18 bis 20 beschriebenen Verfahren kombiniert werden, um die optimale Einarbeitung für jedes der Additive zu nutzen

23. Verfahren zur Herstellung von Formkörpern durch selektives Lasersintern von Sinterpulver gemäß zumindest einem der Ansprüche 1 bis 16.

24. Formkörper, hergestellt durch Laser-Sintern,
**dadurch gekennzeichnet,**
**dass** er zumindest eine Metallsalz und zumindest ein Fettsäurederivat und zumindest ein Polyamid aufweist.

25. Formkörper nach Anspruch 20,
**dadurch gekennzeichnet,**
**dass** er aus einem Polyamid besteht, welches pro Carbonamid-Gruppe zumindest 8 Kohlenstoffatome aufweist.

26. Formkörper nach Anspruch 20 oder 21,
**dadurch gekennzeichnet,**
**dass** er Polyamid 612, Polyamid 11 und/oder Polyamid 12 aufweist.

27. Formkörper nach einem der Ansprüche 20 bis 22,
**dadurch gekennzeichnet,**
**dass** er bezogen auf die Summe der vorhandenen Polyamide von jeweils 0,01 bis 30 Gew.-% Metallsalz und Fettsäurederivat aufweist.

28. Formkörper nach Anspruch 23,
**dadurch gekennzeichnet,**
**dass** er bezogen auf die Summe der vorhandenen Polyamide von jeweils 0,5 bis 15 Gew.-% Metallsalz und Fettsäurederivat aufweist.

29. Formkörper nach zumindest einem der Ansprüche 20 bis 24,
**dadurch gekennzeichnet,**
**dass** das Metallsalz ein Natrium- oder Calciumcarbonat oder ein Magnesiumcarbonat ist.

30. Formkörper nach zumindest einem der Ansprüche 20 bis 25,
**dadurch gekennzeichnet,**
**dass** er Füllstoffe aufweist.

31. Formkörper nach Anspruch 26,
**dadurch gekennzeichnet,**
**dass** einer der Füllstoffe Glaspartikel sind.

32. Formkörper nach einem der Ansprüche 20 bis 27,
**dadurch gekennzeichnet,**
**dass** der Formkörper unter Verwendung von gealtertem Material hergestellt wird, welches einen Rekristallisationspeak und eine Kristallisationsenthalpie aufweist, die jeweils nicht kleiner sind als die des nicht gealterten Materials.

33. Formkörper nach Anspruch 28,
**dadurch gekennzeichnet,**
**dass** der Formkörper unter Verwendung von gealtertem Material hergestellt wird, welches einen höheren Rekristallisationspeak und eine höhere Kristallisationsenthalpie als das nicht gealterte Material aufweist.

## Claims

1. Sinter powder for selective laser sintering,
**characterized in that** the powder
comprises at least one polyamide and at least one metal salt of a weak acid, and at least one fatty acid derivative.

2. Sinter powder according to Claim 1,
**characterized in that** it
comprises a fatty acid derivative which comprises a fatty amide or fatty ester or an ethylenebisstearylamide.

3. Sinter powder according to Claim 1,
**characterized in that** it
comprises a polyamide which has at least 8 carbon atoms per carboxamide group.

4. Sinter powder according to Claim 1 or 2,
**characterized in that** it
comprises nylon-6,12, nylon-11, or nylon-12, or copolyamides based on the abovementioned polyamides.

5. Sinter powder according to any of Claims 1 to 3,
**characterized in that** it
comprises, based on the entirety of the polyamides present in the powder, in each case from 0.01 to 30% by weight of metal salt and fatty acid derivative.

6. Sinter powder according to Claim 4,
**characterized in that** the powder
comprises, based on the entirety of the polyamides present in the powder, in each case from 0.5 to 15% by weight of metal salt and fatty acid derivative.

7. Sinter powder according to any of Claims 1 to 5,
**characterized in that** the powder
comprises a mixture of fine metal salt and fatty acid particles and polyamide particles.

8. Sinter powder according to any of Claims 1 to 5,
**characterized in that** the powder
comprises metal salts and fine particles of fatty acid derivatives incorporated within polyamide particles.

9. Sinter powder according to any of Claims 1 to 5,
**characterized in that** the powder
comprises fine metal salt particles and fatty acid derivatives incorporated within polyamide particles.

10. Sinter powder according to any of Claims 1 to 5,
**characterized in that** the powder
comprises fatty acid derivatives and metal salts incorporated within polyamide particles.

11. Sinter powder according to at least one of Claims 1 to 9,
**characterized in that**
the metal salts are metal carbonates.

12. Sinter powder according to at least one of Claims 1 to 10,
**characterized in that**,
after heat-aging of the powder, the recrystallization peak and/or the enthalpy of crystallization of the powder does not shift to smaller values.

13. Sinter powder according to at least one of Claims 1 to 11,
**characterized in that**,
after heat-aging of the powder, the recrystallization peak and/or the enthalpy of crystallization shifts to higher values.

14. Sinter powder according to at least one of Claims 1 to 12,
**characterized in that**
the metal salts are sodium or calcium carbonate or magnesium carbonate.

15. Sinter powder according to at least one of Claims 1 to 11,
**characterized in that** it
also comprises auxiliaries and/or filler.

16. Sinter powder according to Claim 12,
**characterized in that** it
comprises flow aids as auxiliary.

17. Sinter powder according to Claim 12 or 13,
**characterized in that** it
comprises glass particles as filler.

18. Process for producing sinter powder according to at least one of Claims 1 to 14,
**characterized in that**,
at least one polyamide is mixed with a metal salt and a fatty acid derivative.

19. Process according to Claim 17,
**characterized in that**
polyamide powder obtained by reprecipitation or milling is mixed, after suspension or solution in organic solvent, or in bulk, with metal salt particles and fatty acid derivative particles.

20. Process according to Claim 17,
**characterized in that**
the metal salts and fatty acid derivatives are compounded into a melt of polyamide, and the resultant polyamide comprising additive is processed by precipitation or milling to give laser sinter powder.

21. Process according to Claim 17,
**characterized in that**
at least one metal salt or metal salt particles and a fatty acid derivative is/are mixed with a solvent which comprises polyamide, where the solvent comprising the polyamide comprises the polyamide in dissolved form and the laser sinter powder is obtained by precipitation, or the solvent comprises the polyamide suspended in powder form and the laser sinter powder is obtained by removing the solvent.

22. Process according to Claim 17,
**characterized in that**
the processes described in claims 18 to 20 are combined in order to utilize the ideal method of incorporation for each of the additives.

23. Process for producing mouldings by selective laser sintering of sinter powder according to at least one of Claims 1 to 16.

24. Moulding produced by laser sintering,
**characterized in that** it
comprises at least one metal salt and at least one fatty acid derivative and at least one polyamide.

25. Moulding according to Claim 20,
**characterized in that** it
is composed of a polyamide which has at least 8 carbon atoms per carboxamide group.

26. Moulding according to Claim 20 or 21,
**characterized in that** it
comprises nylon-6,12, nylon-11, and/or nylon-12.

27. Moulding according to any of Claims 20 to 22,
**characterized in that** it
comprises, based on the entirety of the polyamides present, in each case from 0.01 to 30% by weight of metal salt and fatty acid derivative.

28. Moulding according to Claim 23,
**characterized in that** it
comprises, based on the entirety of the polyamides present, in each case from 0.5 to 15% by weight of metal salt and fatty acid derivative.

29. Moulding according to at least one of Claims 20 to 24,
**characterized in that**
the metal salt is a sodium or calcium carbonate or a magnesium carbonate.

30. Moulding according to at least one of Claims 20 to 25,
**characterized in that** it
comprises fillers.

31. Moulding according to Claim 26,
**characterized in that**
glass particles are one of the fillers.

32. Moulding according to any of Claims 20 to 27,
**characterized in that** the moulding
is produced using aged material of which neither the recrystallization peak nor the enthalpy of crystallization is smaller than those for the unaged material.

33. Moulding according to Claim 28,
**characterized in that** the moulding
is produced using aged material of which the recrystallization peak and the enthalpy of crystallization are higher than for the unaged material.

## Revendications

1. Poudre pour le frittage laser sélectif, **caractérisée en ce que** la poudre présente au moins un polyamide et au moins un sel métallique d'un acide faible et au moins un dérivé d'acide gras.

2. Poudre de frittage suivant la revendication 1, **caractérisée en ce qu'**elle présente un dérivé d'acide gras qui présente un amide ou ester d'acide gras ou un éthylènebisstéarylamide.

3. Poudre de frittage suivant la revendication 1, **caractérisée en ce qu'**elle présente un polyamide qui présente au moins huit atomes de carbone par groupe carbonamide.

4. Poudre de frittage suivant la revendication 1 ou 2, **caractérisée en ce qu'**elle présente du polyamide 612, du polyamide 11 ou du polyamide 12 ou des copolyamides à base des polyamides précités.

5. Poudre de frittage suivant l'une des revendications 1 à 3, **caractérisée en ce que** la poudre présente respectivement de 0,01 à 30 % en poids de sel métallique et de dérivé d'acide gras par rapport à la somme des polyamides présents dans la poudre.

6. Poudre de frittage suivant la revendication 4, **caractérisée en ce que** la poudre présente respectivement de 0,5 à 15 % en poids de sel métallique et de dérivé d'acide gras par rapport à la somme des polyamides présents dans la poudre.

7. Poudre de frittage suivant l'une des revendications 1 à 5, **caractérisée en ce que** la poudre présente un mélange de particules finement divisées de sel métallique et d'acide gras et de particules de polyamide.

8. Poudre de frittage suivant l'une des revendications 1 à 5, **caractérisée en ce que** la poudre présente des sels métalliques incorporés dans des particules de polyamide et des particules finement divisées de dérivés d'acide gras.

9. Poudre de frittage suivant l'une des revendications 1 à 5, **caractérisée en ce que** la poudre présente des dérivés d'acide gras incorporés dans des particules de polyamide et des particules de sel métallique finement divisées.

10. Poudre de frittage suivant l'une des revendications 1 à 5, **caractérisée en ce que** la poudre présente des sels métalliques et dérivés d'acide gras incorporés dans des particules de polyamide.

11. Poudre de frittage suivant au moins l'une des revendications 1 à 9, **caractérisée en ce que** les sels métalliques sont des carbonates métalliques.

12. Poudre de frittage suivant au moins l'une des revendications 1 à 10, **caractérisée en ce que**, après vieillissement thermique de la poudre, le pic de recristallisation et/ou l'enthalpie de cristallisation de la poudre ne se décalent pas vers des valeurs plus petites.

13. Poudre de frittage suivant au moins l'une des revendications 1 à 11, **caractérisée en ce que**, après vieillissement thermique de la poudre, le pic de recristallisation et/ou l'enthalpie de cristallisation se décalent vers des valeurs plus grandes.

14. Poudre de frittage suivant au moins l'une des revendications 1 à 12, **caractérisée en ce que** les sels métalliques sont du carbonate de sodium ou de calcium ou du carbonate de magnésium.

15. Poudre de frittage suivant au moins l'une des revendications 1 à 11, **caractérisée en ce qu'**elle présente en supplément des adjuvants et/ou une matière de remplissage.

16. Poudre de frittage suivant la revendication 12, **caractérisée en ce qu'**elle présente, comme adjuvant, un adjuvant d'écoulement.

17. Poudre de frittage suivant la revendication 12 ou 13, **caractérisée en ce qu'**elle présente, comme matière de remplissage, des particules de verre.

18. Procédé de préparation de poudre de frittage suivant au moins l'une des revendications 1 à 14, **caractérisé en ce qu'**on mélange au moins un polyamide à un sel métallique et à un dérivé d'acide gras.

19. Procédé suivant la revendication 17, **caractérisé en ce que** de la poudre de polyamide obtenue par reprécipitation ou broyage est dissoute ou amenée en suspension dans un solvant organique ou est mélangée dans la masse avec des particules de sel métallique et des particules de dérivé d'acide gras.

20. Procédé suivant la revendication 17, **caractérisé en ce que** les sels métalliques et dérivés d'acide gras sont incorporés dans une masse fondue de polyamide et le polyamide contenant des additifs obtenu est traité par précipitation ou broyage en poudre de frittage laser.

21. Procédé suivant la revendication 17, **caractérisé en ce qu'**on mélange au moins un sel métallique ou respectivement des particules de sel métallique et un dérivé d'acide gras avec une solution qui comporte du polyamide, la solution comportant du polyamide présentant le polyamide à l'état dissous et la poudre de frittage laser étant obtenue par précipitation ou la solution présentant le polyamide en suspension sous la forme de poudre et la poudre de frittage laser étant obtenue par élimination du solvant.

22. Procédé suivant la revendication 17, **caractérisé en ce que** les procédés décrits dans les revendications 18 à 20 sont combinés pour mettre à profit l'incorporation optimale de chacun des additifs.

23. Procédé de préparation de corps façonnés par frittage laser sélectif de poudre de frittage suivant au moins l'une des revendications 1 à 16.

24. Corps façonné, préparé par frittage laser, **caractérisé en ce qu'**il présente au moins un sel métallique et au moins un dérivé d'acide gras et au moins un polyamide.

25. Corps façonné suivant la revendication 20, **caractérisé en ce qu'**il est constitué d'un polyamide qui présente au moins huit atomes de carbone par groupe carbonamide.

26. Corps façonné suivant la revendication 20 ou 21, **caractérisé en ce qu'**il présente du polyamide 612, du polyamide 11 et/ou du polyamide 12.

27. Corps façonné suivant l'une des revendications 20 à 22, **caractérisé en ce qu'**il présente respectivement de 0,01 à 30 % en poids de sel métallique et de dérivé d'acide gras par rapport à la somme des polyamides présents.

28. Corps façonné suivant la revendication 23, **caractérisé en ce qu'**il présente respectivement de 0,5 à 15 % en poids de sel métallique et de dérivé d'acide gras par rapport à la somme des polyamides présents.

29. Corps façonné suivant au moins l'une des revendications 20 à 24, **caractérisé en ce que** le sel métallique est du carbonate de sodium ou du carbonate de calcium ou un carbonate de magnésium.

30. Corps façonné suivant au moins l'une des revendications 20 à 25, **caractérisé en ce qu'**il présente des matières de remplissage.

31. Corps façonné suivant la revendication 26, **caractérisé en ce que** des particules de verre sont une des matières de remplissage.

32. Corps façonné suivant l'une des revendications 20 à 27, **caractérisé en ce que** le corps façonné est préparé par utilisation de matière vieillie qui présente un pic de recristallisation et une enthalpie de cristallisation qui ne sont chacun pas plus petits que ceux de la matière non vieillie.

33. Corps façonné suivant la revendication 28, **caractérisé en ce que** le corps façonné est préparé par utilisation d'une matière vieillie qui présente un pic de recristallisation et une enthalpie de cristallisation plus élevés que ceux de la matière non viellie.
